# EUROPÄISCHE PATENTSCHRIFT

(11) **EP 4 078 541 B1**
(45) Veröffentlichungstag und Bekanntmachung des Hinweises auf die Patenterteilung: **26.08.2026**
(21) Anmeldenummer: 20729980.1
(22) Anmeldetag: 27.05.2020
(51) Int. Cl.: G07C 9/00

(54) **VERFAHREN ZUM BETRIEB EINES ZUGANGSSYSTEMS FÜR EIN FAHRZEUG SOWIE FAHRZEUG**
METHOD FOR OPERATING AN ACCESS SYSTEM FOR A VEHICLE, AND VEHICLE
PROCÉDÉ PERMETTANT LE FONCTIONNEMENT D'UN SYSTÈME D'ACCÈS POUR UN VÉHICULE, ET VÉHICULE

(30) Priorität: 17.12.2019 DE 102019134815
(43) Veröffentlichungstag der Anmeldung: 26.10.2022
(73) Patentinhaber: Bayerische Motoren Werke Aktiengesellschaft, 80809 München (DE)
(72) Erfinder: GASSER, Bernhard, 81245 München (DE); DIEWALD, Stefan, 85368 Moosburg a. d. Isar (DE); KALTENBRUNNER, Martin, 84416 Taufkirchen (Vils) (DE); HILBEL, Marcus, 86830 Schwabmünchen (DE)
(86) Internationale Anmeldenummer: PCT/EP2020/064689
(87) Internationale Veröffentlichungsnummer: WO 2021/121671

(56) Entgegenhaltungen:
- DE-A1- 102012 004 000
- DE-A1- 102017 214 105
- DE-A1- 19 755 093
- US-A1- 2014 347 163
- US-A1- 2015 149 221
- US-A1- 2017 089 104

## Beschreibung

Die Erfindung betrifft ein Verfahren zum Betrieb eines Zugangssystems für ein Fahrzeug, insbesondere für ein elektromotorisch angetriebenes Kraftfahrzeug. Die Erfindung betrifft ferner ein Kraftfahrzeug.

Im Rahmen der Entwicklung von neuen Fahrzeugen und der Einkehr der Digitalisierung in den Automobilbereich, ist es vorgesehen, herkömmliche mechanische Schlüssel, vorzugsweise durch digitale Schlüssel zu ersetzen.

Derartige digitale Schlüssel ermöglichen es beispielsweise, dass keine Schlüssel im herkömmlichen Sinn mehr notwendig sind. Vielmehr sind die digitalen Schlüssel auf mobilen Endgeräten oder auf dem Schlüsselkörper hinterlegt, sodass gemäß diesem Beispiel dann das mobile Endgerät oder der Schlüsselkörper als Schlüssel für das Fahrzeug fungiert. Unter dem Schlüsselkörper wird im Sinne dieser Erfindung beispielsweise eine elektronische Funkfernbedienung mit Tasten verstanden. Allgemein kann unter dem Schlüsselkörper ein Schlüssel verstanden werden, der insbesondere keine mechanischen Teile zum Ent- oder Verriegeln des Fahrzeugs aufweist. Dies geschieht bei derartigen Schlüsseln vorzugsweise elektronisch. Wenn nachfolgend also digitale Schlüssel erwähnt werden, handelt es sich hierbei entweder um einen auf einem mobilen Endgerät hinterlegten Schlüssel und/oder ein Schlüssel, der vorzugsweise keine mechanischen Teile aufweist. Die Berechtigung zum Öffnen und Schließen sowie zum Starten des Fahrzeugs ist dann beispielswiese in Form einer digitalen Signatur auf dem mobilen Endgerät hinterlegt, die von dem Fahrzeug erkannt wird.

Nachteilig bei diesem Schlüsselkonzept ist jedoch, wenn das Fahrzeug nicht mehr auf dem vorstehend beschriebenen, auch als elektronischen Weg bezeichneten, Weg aufschließbar ist. Ein derartiges Szenario ist beispielsweise dann der Fall, wenn ein Energiespeicher des Fahrzeugs derart entladen ist, dass es die für das elektronische Aufschließen des Fahrzeugs notwendigen Komponenten nicht mehr ausreichend mit elektrischer Energie versorgen kann. Bei einem Vorhandensein eines mechanischen Schlüssels ist es in diesem Fall möglich, mittels diesem einen Zugang zu dem Fahrzeug zu ermöglichen.

Ein Beibehalten eines noch mechanischen Schlüssels ist speziell für die zuvor erwähnten elektromotorisch angetriebenen Kraftfahrzeuge lediglich mit einem hohen logistischen und konfigurationstechnischen Aufwand verbunden. Außerdem sind Hardware-Maßnahmen im Fahrzeug zum Öffnen notwendig (Schließzylinder, Bowdenzug, Schlossmechanik, etc.) Zudem beeinflusst der mechanische Teil des Schlüssels auch in Bezug auf Größe und Gewicht ein optisches Erscheinungsbild des Schlüssels.

Beispielsweise offenbart US 2014 / 0 347 163 A1 ein System zum Zugang auf ein Fahrzeug, wenn die Hauptbatterie nicht in der Lage ist, ausreichend Strom zum Aktivieren der elektrischen Türschlösser/Verriegelungen des Fahrzeugs zu liefern. Das System umfasst: eine Stromversorgung in der Tür oder dem Verriegelungsgriff, die Strom an die elektrische Verriegelung des Fahrzeugs liefert; eine Eintrittsauthentisierungseinrichtung zum Empfangen einer oder mehrerer Eingaben zum Authentisieren des Zugangs eines Benutzers zum Fahrzeug, wobei die Eintrittsauthentisierungseinrichtung von der aufladbaren Stromversorgung bestromt wird; und einen Verriegelungscontroller, der von der Stromversorgung bestromt wird und operativ mit der elektrischen Verriegelung und der mindestens einen Eintrittsauthentisierungseinrichtung verbunden ist, um Informationen von der Eintrittsauthentisierungseinrichtung entsprechend der einen oder den mehreren Eingaben zu empfangen. Der Verriegelungscontroller kann den Zugang eines Benutzers zum Fahrzeug authentisieren, um die elektrische Verriegelung in einen entriegelten Zustand zu versetzen, so dass die Tür geöffnet werden kann.

DE 197 55 093 A1 offenbart einen Energieempfangsanschluss, über den einem Fahrzeug elektrische Energie zugeführt werden kann, mit einer zweiten Sperreinrichtung, mit der der Zugang zum Energieempfangsanschluss im gesperrten Zustand verhindert und im entsperrten Zustand ermöglicht wird, wobei eine Energieempfangseinrichtung, mit der im gesperrten Zustand des Energieempfangsanschlusses Energie zum Entsperren der zweiten Sperreinrichtung von einer externen Vorrichtung empfangen werden kann, vorgesehen ist. Diese hat eine zweite Sperreinrichtung, die eine elektrisch offenbare Klappe aufweist, hinter der sich ein elektrischer Anschluss befindet.

US 2015 / 0 149 221 A1 offenbart einen Ladedienst für Elektrofahrzeuge der es ermöglicht, Elektrofahrzeuge zu laden, wenn bestimmte Bedingungen erfüllt sind (z. B. zu bestimmten Zeiten, wenn bestimmte Batterieladestände erreicht sind, wenn sie sich an bestimmten Standorten befinden usw.), ohne dass die Benutzer dieser Elektrofahrzeuge die Fahrzeuge selbst aufladen müssen. Es werden auch andere Funktionen zum Laden von Elektrofahrzeugen bereitgestellt, wie z. B. eine Anwendung zur Schätzung der Reichweite (z. B. Entfernung und/oder Zeit), die bei einem aktuellen Batterieladestand eines Elektrofahrzeugs verfügbar ist.

Ausgehend hiervon liegt der Erfindung dafür die Aufgabe zugrunde, ein Verfahren zum Betrieb eines Zugangssystems für ein Fahrzeug sowie ein Fahrzeug anzugeben, deren Hilfe ein Zugang zu dem Fahrzeug ohne einen mechanischen Schlüssel auf einfache Weise realisiert ist.

Mit Blick auf das Verfahren wird die Aufgabe erfindungsgemäß gelöst durch ein Verfahren mit den Merkmalen des Anspruchs 1. Mit Blick auf das Fahrzeug wird die Aufgabe erfindungsgemäß gelöst durch ein Fahrzeug mit den Merkmalen des Anspruchs 8.

Vorteilhafte Ausgestaltungen, Weiterbildungen sowie Varianten sind Gegenstand der Unteransprüche.

Die im Hinblick auf das Verfahren aufgeführten Vorteile und bevorzugten Ausgestaltungen sind sinngemäß auf das Fahrzeug zu übertragen und umgekehrt.

Konkret wird die auf das Verfahren gerichtete Aufgabe gelöst durch ein Verfahren zum Betrieb eines Zugangssystems für ein Fahrzeug, insbesondere für ein elektromotorisch angetriebenes Kraftfahrzeug. Unter dem elektromotorisch angetriebenen Kraftfahrzeug kann hierbei ein Kraftfahrzeug, beispielsweise ein Personenkraftfahrzeug verstanden werden, welches entweder zusätzlich zu einem Verbrennungsmotor oder ausschließlich einen Elektromotor als Antriebsmotor aufweist.

In einem ersten Schritt wird bei einem Erreichen oder Unterschreiten eines vorgegebenen Spannungswertes eines Energiespeichers des Fahrzeugs eine Fremdspeiseeinrichtung des Fahrzeugs freigegeben bzw. entriegelt. Unter dem Energiespeicher des Fahrzeuges wird hierbei im Zusammenhang mit der vorliegenden Erfindung vorzugsweise eine Fahrzeugbatterie und speziell ein Energiespeicher verstanden, der zumindest die Komponenten mit elektrischer Energie versorgt, die für ein Verriegeln und Entriegeln des Fahrzeugs ausgebildet sind. Vorzugsweise handelt es sich somit bei dem Energiespeicher um eine Niedervolt-Batterie mit einem maximalen Spannungsniveau von 12 Volt. Unter dem vorgegebenen Spannungswert des Energiespeichers wird im Zusammenhang mit der vorliegenden Erfindung ein Spannungswert verstanden, der beispielsweise 5% bis 10% des maximalen Spannungsniveaus des Energiespeichers entspricht. So weist beispielsweise der vorgegebene Spannungswert im Falle einer 12V Niedervolt-Batterie einen Wert im Bereich von 0,6V bis 1,2V auf. Der vorgegebene Spannungswert ist hierbei beispielsweise auf einem Energie-Management-System abgespeichert, welches einen Ist-Wert der Energiespeicherspannung erfasst und mit dem vorgegebenen Wert abgleicht.

Unter der Fremdspeiseeinrichtung des Fahrzeugs wird im Zusammenhang mit der vorliegenden Erfindung ein Anschluss des Fahrzeuges für eine externe Energieversorgung verstanden. Unter entriegeln wird hierbei verstanden, dass ein Zugang zu der Fremdspeiseeinrichtung freigegeben wird. Mit anderen Worten ist die Fremdspeiseeinrichtung beispielsweise von einer Klappe abgedeckt und vor einem Erreichen oder Unterschreiten des vorgegebenen Spannungswertes des Energiespeichers nicht zugänglich.

Anschließend wird zumindest ein Fahrzeugzugangsanteil eines Steuergeräts des Fahrzeugs über die Fremdspeiseeinrichtung mit einem externen Fremdversorgungsmittel mit elektrischer Energie versorgt. Unter dem Fahrzeugzugangsanteil des Steuergerätes wird hierbei vorzugsweise der Teil des Steuergeräts und/oder einer Bordnetz-Infrastruktur des Fahrzeugs verstanden, welcher/welche für ein Verriegeln und/oder Freigeben der Türen oder sonstiger Zugangsmöglichkeiten des Fahrzeugs verantwortlich ist. Hierzu wird das Fremdversorgungsmittel über die Fremdspeiseeinrichtung mit dem Fahrzeug und speziell mit zumindest dem Fahrzeugzugangsanteil elektrisch verbunden.

Unter dem externen Fremdversorgungsmittel kann hierbei ein externer Energiespeicher verstanden werden, der zur Abgabe von elektrischer Energie, speziell über die Fremdspeiseeinrichtung an das Fahrzeug ausgebildet ist.

In einem nächsten Schritt wird anschließend eine Verriegelung des Fahrzeugs von dem mit elektrischer Energie versorgten Fahrzeugzugangsanteils des Steuergeräts aufgehoben, sodass ein Zugang zu dem Fahrzeug ermöglicht wird. Unter der Ermöglichung des Zugangs zu dem Fahrzeug kann im Sinne der vorliegenden Erfindung verstanden werden, dass der Fahrer, nachdem der Fahrzeuganteil mit elektrischer Energie versorgt wurde, wie gewohnt mit seinem vorzugsweise digitalen Schlüssel durch einen Entriegelungsbefehl öffnen kann und somit Zugang hierzu erhält. Der Entriegelungsbefehl kann hierbei beispielsweise über einen Tastendruck am digitalen Schlüssel, über eine Berührung an einer Sensorfläche des Türaußengriffs oder über eine Entfernungsdetektion des digitalen Schlüssels erfolgen, bei der der Entriegelungsbefehl ausgesendet wird, wenn sich der digitale Schlüssel innerhalb eines definierten Radius um das Fahrzeug befindet. Ein Ermöglichen des Zugangs ohne den Entriegelungsbefehl ist insbesondere nicht vorgesehen.

Hierdurch ist es ermöglicht, speziell ohne ein Vorhandensein eines mechanischen Schlüssels, selbst bei entladenem Energiespeicher, einen Zugang zu dem Fahrzeug zu ermöglichen, da keine mechanischen Komponenten hierzu notwendig sind. Der Kern der vorliegenden Erfindung liegt somit in einer behelfsmäßigen, externen Energieversorgung des Teils (Fahrzeugzugangsanteil) des Fahrzeugs, der für den Zugang zu dem Fahrzeug, also speziell für ein Ver- und Entriegeln des Fahrzeugs zuständig ist. Speziell bei einem rein digitalen Fahrzeugschlüssel ist somit weiterhin in einem Notfall der Zugang zu dem Fahrzeug sichergestellt, da die hierfür notwendigen Maßnahmen (Entriegelung und Freigabe der Fremdspeiseeinrichtung) von dem Fahrzeug ausgehen, da dieses bevorzugt den Spannungswertes Energiespeichers überwacht und bei dem bereits beschriebenen unterschreiten des vorgegebenen Spannungswertes des Energiespeichers ohne eine Aktion oder ein Zutun des Fahrers die Fremdspeiseeinrichtung für die externe Energieversorgung entriegelt und freigibt. Ein Aufsperren mittels eines mechanischen Schlüssels ist somit nicht mehr zwingend erforderlich. Zudem ist sichergestellt, dass kein unerlaubter Zugang zu dem Fahrzeug erfolgt, da die Fremdspeiseeinrichtung in einem Normalfall, beispielsweise also wenn der Energiespeicher vollgeladen ist, nicht zugänglich ist.

Weiterhin ist gewährleistet, dass durch den ermöglichten Zugang zum Fahrzeug sich daran anschließende Maßnahmen zum erneuten in Betrieb nehmen des Fahrzeuges unternommen werden können. Beispielsweise kann nachdem der Zugang zu dem Fahrzeug ermöglicht wurde, aus dem Innenraum die Motorhaube des Fahrzeuges geöffnet werden, sodass eigentliche (Not-)Ladeanschlüsse für den Energiespeicher des Fahrzeuges freigegeben werden.

Das zuvor beschriebene Verfahren ist erfindungsgemäß auf alle im Kraftfahrzeugbereich vorkommenden Schlössern anwendbar. Das umfasst mechanische Schlösser, bei denen die Bestromung für eine Ent- und Verriegelung eine mechanische Aktion aktiviert, sowie elektrische Schlösser, bei denen die Stati "verriegelt" und "entriegelt" logische Zustände sind. Es wird ebenfalls auch eine Kombination aus den beiden vorstehend erwähnten Schlössern umfasst.

In einer Ausführungsform ist der Fahrzeugzugangsanteil derart mit einem Bordnetz des Fahrzeugs elektrisch verbunden, dass durch die externe Energieversorgung über die Fremdspeiseeinrichtung lediglich der Fahrzeugzugangsanteil durch das Fremdversorgungsmittel mit elektrischer Energie versorgt wird. Somit ist zum einen sichergestellt, dass speziell nur der Anteil des Fahrzeuges mit elektrischer Energie versorgt wird, der für den Zugang zu dem Fahrzeug benötigt wird und somit Energie gespart wird. Zum anderen ist hierdurch ermöglicht, dass bei einem ausreichenden Spannungsniveau des Energiespeichers, also wenn der vorgegebene Spannungswertes nicht erreicht oder unterschritten wurde, kein Strom und damit eine Energieeinspeisung von außen (also extern) in das Bordnetz des Fahrzeuges ermöglicht ist. Dies hat den Vorteil, dass einer Fehlbedienung vorgebeugt wird.

Gemäß einer alternativen Ausführungsform wird das gesamte Steuergerät und somit nicht nur der Fahrzeugzugangsanteil des Steuergerätes mit dem externen Fremdversorgungsmittel über die Fremdspeiseeinrichtung mit elektrischer Energie versorgt. Dies hat den Vorteil, dass bei einer ausreichenden Energieversorgung des gesamten Steuergerätes und der damit verbundenen elektrischen Infrastruktur des Fahrzeuges zugleich weitere externe Lademöglichkeiten, wie das beispielsweise zuvor erwähnte Notladen über den Motorraum, ermöglicht werden.

Gemäß einer zweckdienlichen Ausführungsform weisen das externe Fremdversorgungsmittel und die Fremdspeiseeinrichtung zueinander korrespondierende Anschlüsse auf, welche vorzugsweise nach USB Power Delivery Standard ausgebildet sind. Speziell sind die Anschlüsse als USB-C Anschlüsse ausgebildet, über die eine elektrische Leistung mit Werten bis zu 60W übertragen werden kann. Hierdurch ist zum einen eine schnelle externe Energieversorgung zumindest des Fahrzeugzugangsanteil des Steuergerätes ermöglicht. Zum anderen ist speziell ein USB-C Anschluss heutzutage und auch in Zukunft in verschiedenen als externes Fremdversorgungsmittel dienenden Komponenten/Geräten verbaut, sodass die Fremdspeiseeinrichtung des Fahrzeugs mit und für mehrere speisende Geräte kompatibel ist. Als externes Fremdspeisemittel können somit beispielsweise eine Powerbank, ein Smartphone, oder ein Laptop dienen.

In einer Ausführungsform wird zusätzlich zu dem Fahrzeugzugangsanteil auch zumindest ein Funkempfänger für ein Zentralverriegelungssystem des Fahrzeuges durch das externe Fremdversorgungsmittel mit elektrischer Energie versorgt. Hierbei handelt es sich bei dem zumindest einen Funkempfänger um einen Funkempfänger, welcher zum Empfang des Signals eines oder mehrerer digitaler Schlüssel, insbesondere des bereits vorstehend erwähnten Entriegelungsbefehls, ausgebildet ist. Somit ist es in dieser alternativen oder ergänzenden Ausführungsform ermöglicht, zusätzlich über einen vorhandenen Schlüssel mittels Authentifizierung einen Zugang zu dem Fahrzeug zu ermöglichen.

In einer weiteren Alternative oder ergänzenden Ausführungsform wird lediglich ein Türschloss des Fahrzeuges und somit lediglich eine Tür durch den mit elektrischer Energie versorgten Fahrzeugzugangsanteil entriegelt. Hierdurch ist eine Energieeinsparung dahingehend realisiert, dass die elektrische Energie, welche extern dem Fahrzeugzugangsanteil zugeführt werden muss, um einen Zugang zum Fahrzeug zu ermöglichen, verringert wird, da die elektrische Versorgung des Fahrzeugzugangsanteils lediglich ausreichen muss, um eine anstatt beispielsweise alle Türen des Fahrzeugs zu entriegeln.

Es wird erfindungsgemäß eine drahtlose Datenverbindung zwischen einem Schlüssel des Fahrzeugs und dem Fahrzeugzugangsanteil ausgebildet, sodass beim Versorgen des Fahrzeugzugangsanteils mit elektrischer Energie der Schlüssel aktiviert wird. Unter Aktivieren wird hierbei verstanden, dass der Schlüssel beispielsweise mit einer Signatur des Fahrzeuges belegt wird, sodass dieser zum anschließenden Öffnen und Schließen nur dieses Fahrzeuges herangezogen werden kann. Dieser Vorgang wird auch als "Pairing" bezeichnet. Die zuvor beschriebene Ausführungsform hat sich insbesondere für den Fall als vorteilhaft erwiesen, in dem vorgegebenen Spannungswert erreicht oder unterschritten wurde und lediglich ein Ersatzschlüssel, welcher jedoch zuvor noch nie innerhalb oder für das Fahrzeug verwendet wurde, verfügbar ist.

Hiermit und speziell durch die Aktivierung des Schlüssels mittels der drahtlosen Datenverbindung ist somit auch für diesen Fall ein Zugang zu dem Fahrzeug ermöglicht. Die drahtlose Datenverbindung zum Aktivieren des Schlüssels erfolgt hierbei vorzugsweise verschlüsselt.

Konkret wird die auf das Fahrzeug gerichtete Aufgabe gelöst durch ein Fahrzeug, insbesondere ein elektromotorisch angetriebenes Kraftfahrzeug, welches zumindest einen Energiespeicher, ein Fahrzeugzugangsanteil eines Steuergeräts des Fahrzeugs, sowie eine Fremdspeiseeinrichtung aufweist. Die Fremdspeiseeinrichtung ist hierbei in Abhängigkeit eines Spannungswertes eines Energiespeichers freigebbar.

Das erfindungsgemäße Fahrzeug ist insbesondere zur Durchführung des vorstehend beschriebenen Verfahrens ausgebildet, sodass die Fremdspeiseeinrichtung derart eingerichtet ist, zumindest ein Fahrzeugzugangsanteil eines Steuergerätes durch ein externes Fremdversorgungsmittel mit elektrischer Energie zu versorgen, um einen Zugang zu dem Fahrzeug zu entriegeln.

In einer Ausführungsform ist die Fremdspeiseeinrichtung unabhängig von einem Bordnetz des Fahrzeuges mit dem Fahrzeugzugangsanteil des Steuergeräts elektrisch verbunden.

Bevorzugt weisen die Fremdspeiseeinrichtung sowie das Fremdversorgungsmittel zueinander korrespondierende Anschlüsse, insbesondere nach USB Power Delivery Standard auf.

Ein Ausführungsbeispiel der Erfindung wird nachfolgend anhand der Figur näher erläutert. Diese zeigt in teilweise stark vereinfachter Darstellung:

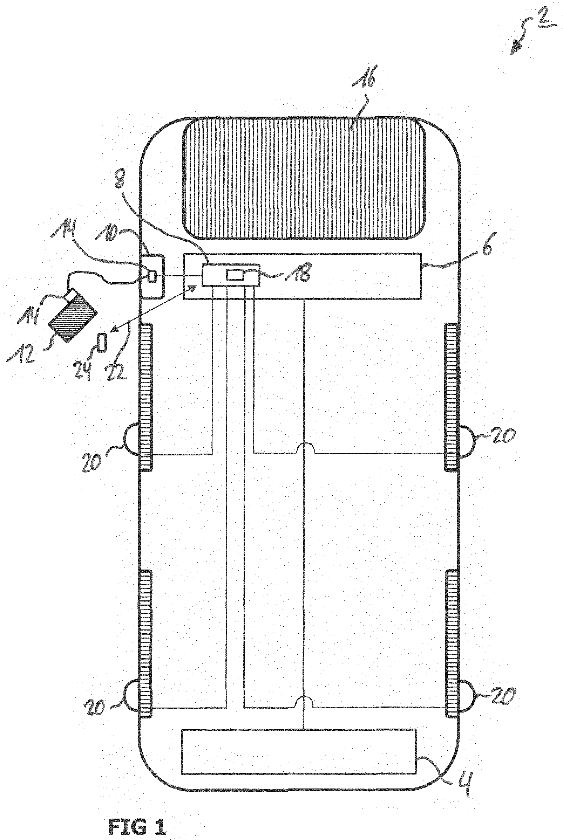

- Fig. 1: ein skizziertes Fahrzeug, welches zur Durchführung des erfindungsgemäßen Verfahrens ausgebildet ist.

Das in Fig. 1 dargestellte Fahrzeug 2 ist zur Durchführung eines erfindungsgemäßen Verfahrens zum Betrieb eines Zugangssystems ausgebildet. Das Fahrzeug 2 im Ausführungsbeispiel gemäß Fig. 1 ist als ein elektromotorisch angetriebenes Kraftfahrzeug ausgebildet. D. h. das Fahrzeug 2 weist einen nicht dargestellten Elektromotor als Antriebsmotor auf. Zudem weist das Fahrzeug 2 einen Energiespeicher 4 auf, der speziell alle nicht für einen Antrieb zuständigen Komponenten des Fahrzeugs 2 mit elektrischer Energie versorgt. Derartige Komponenten werden üblicherweise über ein 12V-Bordnetz mit elektrischer Energie versorgt, weswegen der Energiespeicher 4 im Ausführungsbeispiel als eine Batterie mit einer mit einem Soll-Spannungsniveau von 12V ausgebildet ist. Alternativ ist der Energiespeicher als eine 24V-Batterie ausgebildet, was jedoch keinen Einfluss auf das erfindungsgemäße Verfahren ausübt.

Weiterhin weist das Fahrzeug 2 ein Steuergerät 6 auf, welches einen Fahrzeugzugangsanteil 8 aufweist. Der Fahrzeugzugangsanteil 8 dient einer Ansteuerung von zumindest einem Türschloss 20, insbesondere von allen Türschlössern 20 des Fahrzeugs 2 und ermöglicht somit ein Verriegeln oder ein Entriegeln des Fahrzeugs 2.

Zudem weist das Fahrzeug eine Fremdspeiseeinrichtung 10 auf, die gemäß dem erfindungsgemäßen Verfahren bei einem Unterschreiten eines vorgegebenen Spannungswertes des Energiespeichers 4 entriegelt und somit freigegeben wird. Hierzu ist die Fremdspeiseeinrichtung 10 beispielsweise mit einer nicht gezeigten Klappe verdeckt, welche bei dem zuvor erwähnten Erreichen oder Unterschreiten des vorgegebenen Spannungswertes des Energiespeichers 4 entriegelt wird und geöffnet werden kann. Die Fremdspeiseeinrichtung 10 dient hierbei einer externen (Not-)Versorgung des Fahrzeugzugangsanteils 8 mit elektrischer Energie. Hierzu wird speziell ein Fremdversorgungsmittel 12 herangezogen, das über die Fremdspeiseeinrichtung 10 vorzugsweise leitungsgebunden mit dem Fahrzeug 2 und speziell mit dem Fahrzeugzugangsanteil 8 verbunden wird. Sowohl das externe Fremdversorgungsmittel 12 als auch die Fremdspeiseeinrichtung 10 weisen hierfür zueinander korrespondierende Anschlüsse 14 auf, die vorzugsweise nach USB Power Delivery Standard ausgebildet sind. Bei dem externen Fremdversorgungsmittel 12 handelt es sich beispielsweise um ein Smartphone, eine Powerbank, ein Laptop oder um einen sonstigen, insbesondere tragbaren Energiespeicher, der von dem Fahrer des Fahrzeugs 2 entweder für gewöhnlich oder auf einfache Weise mitgeführt werden kann.

Um speziell bei einem entladenen Energiespeicher 4 einen Zugang zu dem Fahrzeug 2 zu ermöglichen, erfolgt gemäß dem erfindungsgemäßen Verfahren wie bereits erwähnt, ein Entriegeln und somit ein Freigeben der Fremdspeiseeinrichtung 10.

Anschließend ist ermöglicht, über die Fremdspeiseeinrichtung 10 mittels des externen Fremdversorgungsmittels 12, zumindest den Fahrzeugzugangsanteil 8 des Steuergerätes 6 und alternativ das gesamte Steuergerät 6 mit elektrischer Energie zu versorgen, um eine Türverriegelung aufzuheben. Mit anderen Worten wird zumindest der Fahrzeugzugangsanteil 8 über das Fremdversorgungsmittel 12 elektrisch "notversorgt", sodass ein Aufschließen des Fahrzeuges 2 durch einen Entriegelungsbefehl möglich ist. Durch den somit sichergestellten Zugang zu dem Fahrzeug 2 kann dann beispielsweise aus dem Innenraum die Motorhaube 16 des Fahrzeugs 2 entriegelt und geöffnet werden, sodass über nicht dargestellte Ladeanschlüsse, welche sich unter der Motorhaube 16 befinden, der Energiespeicher 4 erneut vollständig aufgeladen werden kann.

Hintergrund des erfindungsgemäßen Verfahrens ist hierbei speziell die Sicherstellung und das Ermöglichen des Zugangs zu dem Fahrzeug, wenn kein mechanischer Schlüssel vorhanden oder vorgesehen ist. Speziell im Bereich der Elektromobilität, aber auch im Rahmen der Digitalisierung und im Bereich des autonomen Fahrens, wird zunehmend auf die Ausgabe eines mechanischen Schlüssels verzichtet.

Alternativ oder ergänzend erfolgt zusätzlich zu der elektrischen Versorgung des Fahrzeugzugangsanteils 8 auch eine elektrische Versorgung zumindest eines Funkempfängers 18, welcher zum Empfang eines von einer Zentralverriegelung in Form eines Schlüssels ausgesendeten Signals, beispielsweise des Entriegelungsbefehls, dient.

Gemäß einer alternativen oder ergänzenden Ausgestaltung wird lediglich ein Türschloss 20 des Fahrzeugs 2 durch den mit elektrischer Energie versorgten Fahrzeugzugangsanteil 8 entriegelt. Hierbei kann die elektrische Energie, welche zur Sicherstellung des Zugangs zugeführt werden muss, auf ein Minimum reduziert werden, was sich auf einen Energieverbrauch des Fremdversorgungsmittels 12 sowie eine Verringerung der Ladezeit positiv auswirkt.

Es ist vorgesehen, dass eine in Fig. 1 schematisch durch einen Doppelfeil dargestellte drahtlose Datenverbindung 22 zwischen einem Schlüssel 24 des Fahrzeugs 2 und dem Fahrzeug Zugangsanteil 8 des Steuergerätes 6 ausgebildet wird. Bei dem Schlüssel 24 kann es sich entweder um einen separat zum externen Fremdversorgungsmittel 12 ausgeführten Schlüssel 24 handeln (in Fig. 1 dargestellt) oder alternativ um das Fremdversorgungsmittel 12 selbst. Alternativ oder ergänzend kann es sich bei dem Schlüssel 24 auch um eine Funkfernbedienung bekannter Art handeln, die lediglich keine mechanischen Komponenten zum Aufschließen des Fahrzeugs 2 aufweist und somit ebenfalls als ein digitaler Schlüssel 24 ausgebildet ist. Der Entriegelungsbefehl erfolgt hierbei vorzugsweise in bekannter Weise durch einen Knopfdruck.

Hierbei wird somit nach oder parallel zu dem Versorgen des Fahrzeugzugangsanteils 8 mit elektrischer Energie der Schlüssel 24 aktiviert, also z.B. mit einer Signatur des Fahrzeug 2 gepaart. Dieser Ausgestaltung liegt der Gedanke zugrunde, dass somit auch ein Zugang zu dem Fahrzeug 2 ermöglicht ist, wenn der Energiespeicher 4 in zuvor beschriebener Weise entladen ist und beispielsweise lediglich ein (Ersatz-)Schlüssel 24 zur Verfügung steht, mit dem vorher das Fahrzeug 2 noch nie auf- oder zugeschlossen wurde. Durch das Aktivieren des Schlüssel 24 durch die drahtlose Datenverbindung 22 steht der Schlüssel 24 somit anschließend zur Benutzung mit dem Fahrzeug 2 zur Verfügung.

### Bezugszeichenliste

- 2: Fahrzeug
- 4: Energiespeicher
- 6: Steuergerät
- 8: Fahrzeugzugangsanteil
- 10: Fremdspeiseeinrichtung
- 12: Fremdversorgungseinheit
- 14: Anschlüsse
- 16: Motorhaube
- 18: Funkempfänger
- 20: Türschloss
- 22: drahtlose Datenverbindung
- 24: Schlüssel

## Patentansprüche

1. Verfahren zum Betrieb eines Zugangssystems für ein Fahrzeug (2), insbesondere eines elektromotorisch angetriebenen Kraftfahrzeugs, bei dem:
- bei einem Erreichen oder Unterschreiten eines vorgegebenen Spannungswertes eines Energiespeichers (4) des Fahrzeugs (2) eine Fremdspeiseeinrichtung (10) des Fahrzeugs (2) durch das Fahrzeug (2) ein Zugang zu der Fremdspeiseeinrichtung (10) freigegeben wird,
- zumindest ein Fahrzeugzugangsanteil (8) eines Steuergeräts (6) des Fahrzeugs (2) über die Fremdspeiseeinrichtung (10) mit einem externen Fremdversorgungsmittel (12) mit elektrischer Energie versorgt wird und
- der mit elektrischer Energie versorgte Fahrzeugzugangsanteil (8) des Steuergeräts (6) eine Verriegelung des Fahrzeugs (2) bei einem zusätzlichen Empfang eines Entriegelungsbefehls aufhebt, sodass ein Zugang zu dem Fahrzeug (2) ermöglicht wird,
wobei eine drahtlose Datenverbindung (22) zwischen einem Schlüssel (24) des Fahrzeugs (2) und dem Fahrzeugzugangsanteil (8) ausgebildet wird, sodass beim Versorgen des Fahrzeugzugangsanteils (8) mit elektrischer Energie, der Schlüssel (24) aktiviert wird.

2. Verfahren nach Anspruch 1,
wobei der Fahrzeugzugangsanteil (8) derart mit einem Bordnetz des Fahrzeugs elektrisch verbunden ist, dass lediglich der Fahrzeugzugangsanteil (8) mit dem externen Fremdversorgungsmittel (12) über die Fremdspeiseeinrichtung (10) mit elektrischer Energie versorgt wird.

3. Verfahren nach Anspruch 1
wobei das gesamte Steuergerät (6) mit dem externen Fremdversorgungsmittel (12) über die Fremdspeiseeinrichtung (10) mit elektrischer Energie versorgt wird.

4. Verfahren nach einem der vorhergehenden Ansprüche,
wobei das externe Fremdversorgungsmittel (12) und die Fremdspeiseeinrichtung (10) zueinander korrespondierende Anschlüsse (14), vorzugsweise nach USB Power Delivery Standard aufweisen, über die zumindest der Fahrzeugzugangsanteil (8) des Steuergeräts (6) mit elektrischer Energie versorgt wird.

5. Verfahren nach einem der vorhergehenden Ansprüche 2 bis 4,
wobei zusätzlich zu dem Fahrzeugzugangsanteil (8) auch zumindest ein Funkempfänger (18) für ein Zentralverriegelungssystem des Fahrzeugs (2) durch das externe Fremdversorgungsmittel (12) mit elektrischer Energie versorgt wird.

6. Verfahren nach einem der vorhergehenden Ansprüche,
wobei lediglich ein Türschloss (20) des Fahrzeugs (2) durch den mit elektrischer Energie versorgten Fahrzeugzugangsanteil (8) entriegelt wird.

7. Verfahren nach dem vorhergehenden Anspruch,
wobei der digitale Schlüssel (24) authentifiziert wird, damit das Entriegeln ermöglicht wird.

8. Fahrzeug (2), insbesondere elektromotorisch angetriebenes Kraftfahrzeug, aufweisend:
- zumindest einen Energiespeicher (4),
- eine Fremdspeiseeinrichtung zu welcher bei einem Erreichen oder Unterschreiten eines vorgegebenen Spannungswertes des Energiespeichers (4) durch das Fahrzeug (2) ein Zugang freigegeben wird, und
- ein Steuergerät (6) mit zumindest einem Fahrzeugzugangsteil (8),
- einen Schlüssel des Fahrzeugs,
wobei die Fremdspeiseeinrichtung (10) derart eingerichtet ist, den zumindest einen Fahrzeugzugangsanteil (8) durch ein externes Fremdversorgungsmittel (12) mit elektrischer Energie zu versorgen, zum Ermöglichen eines Zugangs zu dem Fahrzeug (2) und wobei das Fahrzeug eingerichtet ist eine drahtlose Datenverbindung (22) zwischen dem Schlüssel (24) und dem Fahrzeugzugangsanteil (8) auszubilden,
sodass beim Versorgen des Fahrzeugzugangsanteils (8) mit elektrischer Energie, der Schlüssel (24) aktiviert ist.

9. Fahrzeug (2) nach Anspruch 8,
wobei die Fremdspeiseeinrichtung (10) unabhängig von einem Bordnetz des Fahrzeuges (2) mit dem Fahrzeugzugangsanteil (8) des Steuergeräts (6) elektrisch verbunden ist.

10. Fahrzeug (2) nach einem der Ansprüche 8 oder 9,
wobei die Fremdspeiseeinrichtung (10) und das Fremdversorgungsmittel (12) zueinander korrespondierende Anschlüsse (14), insbesondere nach USB Power Delivery Standard aufweisen.

## Claims

1. Method for operating an access system for a vehicle (2), in particular an electric motor-driven motor vehicle, wherein:
• upon reaching or falling below a predetermined voltage value of an energy storage device (4) of the vehicle (2), access to an external feeding device (10) of the vehicle (2) is released by the vehicle (2),
• at least one vehicle access portion (8) of a control unit (6) of the vehicle (2) is supplied with electrical energy via the external feeding device (10) with an external supply means (12), and
• the vehicle access portion (8) of the control unit (6) supplied with electrical energy releases a locking of the vehicle (2) upon an additional receipt of an unlocking command, so that access to the vehicle (2) is enabled,
wherein a wireless data connection (22) is formed between a key (24) of the vehicle (2) and the vehicle access portion (8), so that when supplying the vehicle access portion (8) with electrical energy, the key (24) is activated.

2. Method according to claim 1,
wherein the vehicle access portion (8) is electrically connected to an on-board electrical system of the vehicle such that only the vehicle access portion (8) is supplied with electrical energy with the external supply means (12) via the external feeding device (10).

3. Method according to claim 1,
wherein the entire control unit (6) is supplied with electrical energy with the external supply means (12) via the external feeding device (10).

4. Method according to one of the preceding claims,
wherein the external supply means (12) and the external feeding device (10) have mutually corresponding connections (14), preferably according to USB Power Delivery Standard, via which at least the vehicle access portion (8) of the control unit (6) is supplied with electrical energy.

5. Method according to one of the preceding claims 2 to 4,
wherein in addition to the vehicle access portion (8) also at least one radio receiver (18) for a central locking system of the vehicle (2) is supplied with electrical energy by the external supply means (12).

6. Method according to one of the preceding claims,
wherein only one door lock (20) of the vehicle (2) is unlocked by the vehicle access portion (8) supplied with electrical energy.

7. Method according to the preceding claim,
wherein the digital key (24) is authenticated in order to enable the unlocking.

8. Vehicle (2), in particular electric motor-driven motor vehicle, comprising:
• at least one energy storage device (4),
• an external feeding device to which access is released by the vehicle (2) upon reaching or falling below a predetermined voltage value of the energy storage device (4), and
• a control unit (6) with at least one vehicle access part (8),
• a key of the vehicle,
wherein the external feeding device (10) is configured to supply the at least one vehicle access portion (8) with electrical energy by an external supply means (12), for enabling access to the vehicle (2), and wherein the vehicle is configured to form a wireless data connection (22) between the key (24) and the vehicle access portion (8), so that when supplying the vehicle access portion (8) with electrical energy, the key (24) is activated.

9. Vehicle (2) according to claim 8,
wherein the external feeding device (10) is electrically connected to the vehicle access portion (8) of the control unit (6) independently of an on-board electrical system of the vehicle (2).

10. Vehicle (2) according to one of claims 8 or 9,
wherein the external feeding device (10) and the external supply means (12) have mutually corresponding connections (14), in particular according to USB Power Delivery Standard.

## Revendications

1. Procédé pour faire fonctionner un système d'accès pour un véhicule (2), en particulier un véhicule automobile entraîné par un moteur électrique, dans lequel :
• lors de l'atteinte ou du dépassement vers le bas d'une valeur de tension prédéfinie d'un accumulateur d'énergie (4) du véhicule (2), un accès à un dispositif d'alimentation externe (10) du véhicule (2) est libéré par le véhicule (2),
• au moins une partie d'accès au véhicule (8) d'un appareil de commande (6) du véhicule (2) est alimentée en énergie électrique via le dispositif d'alimentation externe (10) avec un moyen d'alimentation externe (12), et
• la partie d'accès au véhicule (8) de l'appareil de commande (6) alimentée en énergie électrique supprime un verrouillage du véhicule (2) lors d'une réception supplémentaire d'une commande de déverrouillage, de sorte qu'un accès au véhicule (2) est rendu possible,
dans lequel une liaison de données sans fil (22) est établie entre une clé (24) du véhicule (2) et la partie d'accès au véhicule (8), de sorte que lors de l'alimentation de la partie d'accès au véhicule (8) en énergie électrique, la clé (24) est activée.

2. Procédé selon la revendication 1,
dans lequel la partie d'accès au véhicule (8) est connectée électriquement à un réseau de bord du véhicule de telle sorte que seule la partie d'accès au véhicule (8) est alimentée en énergie électrique avec le moyen d'alimentation externe (12) via le dispositif d'alimentation externe (10).

3. Procédé selon la revendication 1,
dans lequel l'appareil de commande (6) entier est alimenté en énergie électrique avec le moyen d'alimentation externe (12) via le dispositif d'alimentation externe (10).

4. Procédé selon l'une des revendications précédentes,
dans lequel le moyen d'alimentation externe (12) et le dispositif d'alimentation externe (10) présentent des connexions correspondantes (14) l'une à l'autre, de préférence selon la norme USB Power Delivery, via lesquelles au moins la partie d'accès au véhicule (8) de l'appareil de commande (6) est alimentée en énergie électrique.

5. Procédé selon l'une des revendications précédentes 2 à 4,
dans lequel en plus de la partie d'accès au véhicule (8), au moins un récepteur radio (18) pour un système de verrouillage centralisé du véhicule (2) est également alimenté en énergie électrique par le moyen d'alimentation externe (12).

6. Procédé selon l'une des revendications précédentes,
dans lequel seule une serrure de porte (20) du véhicule (2) est déverrouillée par la partie d'accès au véhicule (8) alimentée en énergie électrique.

7. Procédé selon la revendication précédente,
dans lequel la clé numérique (24) est authentifiée afin de permettre le déverrouillage.

8. Véhicule (2), en particulier véhicule automobile entraîné par un moteur électrique, comprenant :
• au moins un accumulateur d'énergie (4),
• un dispositif d'alimentation externe auquel un accès est libéré par le véhicule (2) lors de l'atteinte ou du dépassement vers le bas d'une valeur de tension prédéfinie de l'accumulateur d'énergie (4), et
• un appareil de commande (6) avec au moins une partie d'accès au véhicule (8),
• une clé du véhicule,
dans lequel le dispositif d'alimentation externe (10) est configuré pour alimenter en énergie électrique la au moins une partie d'accès au véhicule (8) par un moyen d'alimentation externe (12), pour permettre un accès au véhicule (2), et dans lequel le véhicule est configuré pour établir une liaison de données sans fil (22) entre la clé (24) et la partie d'accès au véhicule (8), de sorte que lors de l'alimentation de la partie d'accès au véhicule (8) en énergie électrique, la clé (24) est activée.

9. Véhicule (2) selon la revendication 8,
dans lequel le dispositif d'alimentation externe (10) est connecté électriquement à la partie d'accès au véhicule (8) de l'appareil de commande (6) indépendamment d'un réseau de bord du véhicule (2).

10. Véhicule (2) selon l'une des revendications 8 ou 9,
dans lequel le dispositif d'alimentation externe (10) et le moyen d'alimentation externe (12) présentent des connexions correspondantes (14) l'une à l'autre, en particulier selon la norme USB Power Delivery.
